# EUROPÄISCHE PATENTSCHRIFT

(11) **EP 3 186 009 B1**
(45) Veröffentlichungstag und Bekanntmachung des Hinweises auf die Patenterteilung: **19.09.2018**
(21) Anmeldenummer: 15741959.9
(22) Anmeldetag: 10.07.2015
(51) Int. Cl.: B04B 9/12

(54) **SCHNELLVERSCHLUSS EINER ZENTRIFUGE**
QUICK CLOSURE FOR A CENTRIFUGE
FERMETURE RAPIDE D'UNE CENTRIFUGEUSE

(30) Priorität: 29.08.2014 DE 102014112501
(43) Veröffentlichungstag der Anmeldung: 05.07.2017
(73) Patentinhaber: Andreas Hettich GmbH & Co. KG, 78532 Tuttlingen (DE)
(72) Erfinder: HÖLDERLE, Andreas, 78199 Bräunlingen (DE); EBERLE, Klaus-Günter, 78532 Tuttlingen (DE)
(74) Vertreter: Puschmann Borchert Bardehle Patentanwälte Partnerschaft mbB
(86) Internationale Anmeldenummer: PCT/EP2015/065819
(87) Internationale Veröffentlichungsnummer: WO 2016/030070

(56) Entgegenhaltungen:
- DE-T2- 69 810 060
- DE-U1-202010 014 803

## Beschreibung

Die Erfindung betrifft eine Zentrifuge gemäß der im Oberbegriff des Patentanspruches 1 angegebenen Art. Z.B. aus der DE 698 10 060 T2 ist eine solche Zentrifuge bekannt.

Es sind bereits Zentrifugen mit abnehmbarem Rotor bekannt, die eine Einrichtung zur axialen Verriegelung des Rotors auf der Antriebswelle aufweisen und bei denen zur Verriegelung keine aufwendige Montage und kein spezielles Werkzeug erforderlich sind. Zum Beispiel wird in der DE 695 14 988 T2 eine Zentrifuge vorgeschlagen, bei der der Rotor beim Aufsetzen automatisch in eine Verriegelungsposition gebracht wird. Hierbei greift ein federbeaufschlagter Riegel in eine Aussparung in der Antriebswelle ein und gewährleistet dadurch eine axiale Feststellung des Rotors. Allerdings bestehen hier die Nachteile, dass bei dieser Lösung die Antriebswelle zu einem nicht unbeträchtlichen Teil in den Rotor eindringen muss, um genügend Angriffsfläche für den Verriegelungsmechanismus zu bieten, und dass die Verriegelung unterhalb des Rotors stattfindet. Dadurch ist ein größerer Platzbedarf erforderlich. Zudem wird die Antriebswelle durch die Anordnung eines Teils des Verriegelungsmechanismus in der Antriebswelle geschwächt. Die dadurch zulässige Drehzahl und/oder Haltbarkeit derartiger Ausführungen ist daher begrenzt.
Aus der DE 20 2010 014 803 U1 ist eine gattungsgemäße Zentrifuge bekannt. Diese weist eine Rotorlagerung mit einem Verriegelungssystem auf, beim dem der Rotor auf der Antriebswelle fixiert wird. Das Verriegelungssystem umfasst sich senkrecht zu der Drehachse erstreckende Achsen und zwischen einer Verriegelungsstellung und einer Entriegelungsstellung um die Achsen schwenkbare Verriegelungshebel. Die Verriegelungshebel greifen in der Verriegelungsstellung in eine Ringnut in der Antriebswelle ein und fixieren den Rotor auf der Welle axial. Die Verriegelungshebel sind drehzahlabhängig selbsttätig aus der Entriegelungsstellung in die Verriegelungsstellung überführbar. Bei ca. 600 RPM wird bei Laborzentrifugen oftmals die erste Resonanz durchlaufen. Die gattungsgemäße Zentrifuge kann jedoch bei diesen Drehzahlen keine nennenswerte axiale Haltekraft aufbringen.

Die WO 2011/054906 A1 offenbart eine Zentrifuge mit einem über einen Verriegelungsmechanismus mit einer Antriebswelle verbindbaren Rotor. Der Verriegelungsmechanismus weist dabei um parallel zur Antriebsachse verlaufende Achsen schwenkbare Klinken auf, die eine derartige Masseverteilung aufweisen, dass diese drehzahlabhängig in der Verriegelungsposition gehalten werden. Die Klinken greifen dabei in eine Ringnut der Antriebswelle ein.

Die US 2008/0146429 A1 weist lediglich ein Sperrelement auf, das durch eine Handhabe senkrecht zur Antriebswelle aus einer Entriegelungsposition in eine Verriegelungsposition bewegt wird.

Aufgabe der vorliegenden Erfindung besteht darin, unter Vermeidung der genannten Nachteile eine Zentrifuge mit einem abnehmbaren Rotor zu schaffen, die einen einfacheren und sicheren Schnellverschluss aufweist, der vor allem auch drehzahlunabhängig eine axiale Fixierung sicher ermöglicht. Insbesondere soll der Verriegelungsmechanismus im Bereich des Rotors auch weniger Platz für die Verriegelung erfordern.

Diese Aufgabe wird durch die kennzeichnenden Merkmale des Patentanspruches 1 in Verbindung mit seinen Oberbegriffsmerkmalen gelöst.

Die Unteransprüche bilden vorteilhafte Weiterbildungen der Erfindung.

Der Erfindung liegt die Erkenntnis zugrunde, dass es möglich ist, eine sichere axiale Feststellung in Entnahmerichtung von Rotor und Antriebswelle beim Aufsetzen des Rotors auf die Antriebswelle durch eine Verschlusseinrichtung zu gewährleisten, bei der die Antriebswelle mit einem verbreiterten Bereich eine Rotoröffnung durchgreift und eine Verschließeinrichtung zwischen Rotor und verbreitertem Bereich die Öffnung so blockiert, dass der Rotor zur Antriebswelle in Entnahmerichtung festgelegt ist. Auf einfache Weise ist dadurch der Rotor sicher auf der Antriebswelle angeordnet und auch bei hohen Drehzahlen und der damit einhergehenden elastischen Verformung von Bauteilen der Zentrifuge sicher und mit einfach herzustellenden Mitteln in der Zentrifuge angeordnet.

Nach der Erfindung weist die Zentrifuge eine Antriebswelle auf, einen auf der Antriebswelle gelagerten, axial in eine Entnahmerichtung abnehmbaren Rotor, einen in den Rotor und der Antriebswelle integrierten Schnellverschluss, mittels dessen der Rotor gegenüber der Antriebswelle in Entnahmerichtung fixierbar ist, ein Widerlager in der Antriebswelle, in das der Rotor mit einem Verriegelungsteil eingreift, und zumindest ein Sperrelement, welches bei seiner Aktivierung den Rotor relativ zur Antriebswelle festlegt und welches zwischen Verriegelungsteil des Rotors und dem Widerlager der Antriebswelle wirkt. Der Schnellverschluss weist ein Kraftübertragungselement auf. Als besonders vorteilhaft hat es sich erwiesen, wenn das Sperrelement über das Kraftübertragungselement mit einer Handhabe in Wirkverbindung stehen und wenn die Verriegelung und/oder die Entriegelung des Schnellverschlusses jeweils durch eine Bewegung der Handhabe und des Kraftübertragungselements in eine Richtung parallel zur Antriebsachse erfolgen, wobei während der Entriegelung eine Bewegung der Handhabe in Richtung Antriebswelle und während einer Verriegelung eine Bewegung der Handhabe in die entgegengesetzte Richtung erfolgt. Bei dieser Anordnung können Aufsetzen und Entnahme des Rotors gut mit Verriegelung und Entriegelung des Rotors kombiniert werden. Die geringe Anzahl an erforderlichen Bauteilen gewährleistet eine geringe Störanfälligkeit der Lösung. Zudem hat diese Anordnung den Vorteil, dass nur ein vergleichsweise kleiner Endbereich der Antriebswelle zur axialen Feststellung von Rotor und Antriebswelle verwendet werden muss und dass auf einen Verriegelungsmechanismus verzichtet werden kann, der eine laterale Kraft ausübt und bei dem ein gewisser Längenabschnitt der Antriebswelle erforderlich ist. Somit wird ein geringerer Platzbedarf erreicht und eine Schwächung der Antriebswelle vermieden. Der Rotor ist zudem unabhängig von der Drehzahl immer sicher fixiert.

Günstig ist es, wenn das Sperrelement in der Verriegelungsstellung durch Federkraft in die Verriegelungsstellung vorgespannt ist und hierfür zumindest eine Feder vorgesehen ist. Hierdurch wird die Haltekraft vergrößert.

Um den Rotor noch sicherer auf der Antriebswelle festzulegen, können mehrere Sperrelemente vorgesehen sein, die in der Verriegelungsstellung in gleichmäßigen Abständen zueinander um das Verriegelungsteil angeordnet sind. Dadurch ist es auch leichter, den Schnellverschluss vollständig rotationssymmetrisch zu gestalten, was das Risiko des Auftretens einer Unwucht minimiert.

Gemäß einem Aspekt der Erfindung sind die Sperrelemente mit Federn, insbesondere elastisch verschwenkbaren Fingern, verbunden. Diese Finger wiederum sind mit einem gemeinsamen Träger verbunden, wobei die Sperrelemente in Richtung Verriegelungsteil vorbelastet sind. Durch diese Federbeaufschlagung und durch die Anbringung der Finger an einem gemeinsamen Träger ist gewährleistet, dass die Sperrelemente beim Aufsetzen des Rotors leicht in ihre vorgesehene Position zwischen dem Verriegelungsteil und dem Widerlager gelangen und somit den Rotor und die Antriebswelle axial fixieren.

In einer weiteren vorteilhaften Ausgestaltung bilden die Sperrelemente, die Federn und der Träger als Baueinheit eine Sperreinheit. So wird die Anzahl der Bauteile verringert und die Montage vereinfacht.

Um die Sperrwirkung weiter zu verbessern, ist die Form des Sperrelements an den ihm zugeordneten Bereich des Verriegelungsteils angepasst.

Eine Vereinfachung, insbesondere des Verriegelns, wird auch dadurch erzielt, dass das Verriegelungsteil rotationssymetrisch ausgebildet ist, da dann beim Aufsetzen des Rotors die Anzahl der Sperrelemente und die Orientierung des Rotors in der Horizontalen keine Rolle spielen. Besonders günstig ist es dabei, wenn sich das Verriegelungsteil zunächst in Richtung Antriebswelle konisch verbreitert und sich dann wieder bereichsweise verschmälert.

Vorzugsweise ist das Verriegelungsteil einstückig und materialeinheitlich mit dem Rotor ausgebildet. Dadurch wird die Zahl der Bauteile weiter reduziert und eine höhere Festigkeit erreicht.

Bei einer vorteilhaften Weiterbildung der Erfindung ist die Sperreinheit auf einem Verriegelungskolben angeordnet, der durch Sperrfedern in die Verriegelungsstellung belastet ist. Die Federbeaufschlagung stellt sicher, dass entgegen dem beim Einsetzen des Rotors vom Verriegelungsteil auf die Sperrelemente ausgeübten Druck die Sperrelemente das Verriegelungsteil schließlich vollständig umschließen. Der Verriegelungskolben dient als Bindeglied zwischen Sperrfedern und Sperreinheit. An ihm können an der einen, dem Motor zugewandten, Seite die Sperrfedern fest angeordnet werden. Die andere, dem Rotor zugewandte, Seite bietet ausreichend Fläche, um die Sperreinheit aufzunehmen und ein, beispielsweise durch unsachgemäßes Aufsetzen des Rotors verursachtes, Verrutschen oder eine Schräglage der Sperreinheit im Verriegelungsraum zu korrigieren.

Um die Verriegelung weiter zu automatisieren und noch stabiler zu machen, weist die Antriebswelle einen Anschlag auf, gegen die der Verriegelungskolben in einer maximalen Öffnungsstellung gehalten ist.

Besonders einfach kann der Mechanismus zur Entriegelung des Schnellverschlusses dadurch gestaltet werden, dass das Kraftübertragungselement durch einen Stift gebildet ist, der mit der Handhabe verbunden ist. Durch Drücken der Handhabe in Richtung Motor wird die Sperreinheit samt Verriegelungskolben vom Verriegelungsteil weg gegen den Anschlag gedrückt. Dabei werden die Sperrelemente entlang der äußeren Kontur des Verriegelungsteils ausgelenkt, wodurch die axiale Festlegung des Rotors auf der Antriebswelle entfällt und der Rotor entnommen werden kann.

Gemäß einem weiteren Aspekt der Erfindung ist das Widerlager Teil der Begrenzung eines Verriegelungsraums, der eine Öffnung für das Einbringen des Verriegelungsteils aufweist, in den das Verriegelungsteil des Rotors eingreift, und in dem die Sperreinheit, der Verriegelungskolben, die Sperrfedern und der Anschlag angeordnet sind. Durch die bauliche Einheit von Verriegelungsraum und Widerlager wird die Verriegelung noch stabiler.

Um das Auftreten von Unwuchten zu vermeiden, ist es vorteilhaft, wenn das Verriegelungsteil, der Verriegelungsraum, die Sperreinheit, die Handhabe und/oder die Antriebswelle konzentrisch zueinander angeordnet sind.

Um eine einfache Montage und Demontage zu ermöglichen, sind die Sperrelemente zum Entriegeln und Verriegeln des Schnellverschlusses durch die Feder elastisch so auslenkbar, dass das Verriegelungsteil an seiner breitesten Stelle in Bezug auf die Mittelachse der Antriebswelle durch die Sperrelemente passierbar ist.

Gemäß einer bevorzugten Ausführungsform weist das Verriegelungsteil eine Steuerfläche für die Sperrelemente auf, auf der bei Einbringen des Rotors durch Bewegen entgegen der Entnahmerichtung in eine Verriegelungsposition des Schnellverschlusses die Sperrelemente in Richtung Antriebswelle bewegt und in die Verriegelungsposition gegen die Antriebswelle geführt werden. Gleiches gilt bei der Entnahme.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine Schnittansicht eines Winkelrotors mit Deckel und einer Antriebswelle entlang der Mittelachse der Zentrifuge nach einer ersten Ausführungsform der Erfindung;

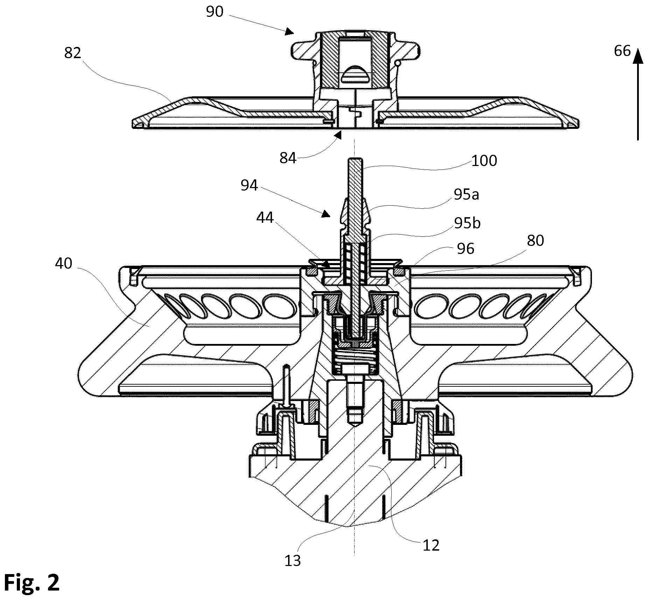

- Fig. 2: eine Schnittansicht des Rotors und der Antriebswelle aus Fig. 1 mit abgenommenem Deckel;
- Fig. 3: eine perspektivische Detailansicht der Baueinheit aus Verschlussfedern und Sperrelementen;
- Fig. 4: eine vergrößerte Detaildarstellung von Fig. 1 mit Schnellverschluss im entriegelten Zustand, aber noch mit auf der Welle aufgesetzten Rotor;
- Fig. 5: eine vergrößerte Detaildarstellung von Fig. 1 mit Schnellverschluss im verriegelten Zustand von Rotor und Antriebswelle;
- Fig. 6a: eine Schnittansicht eines Ausschwingrotors ohne Deckel mit einer Handhabe zur Entriegelung, im von der Antriebswelle abgenommenen Zustand, bei dem der Stift und die Feder noch nicht entspannt sind gemäß einer weiteren Ausführungsform der Erfindung;
- Fig. 6b: eine Schnittansicht eines Teils der Antriebswelle, bei dem der Rotor aus Fig. 6a entfernt ist, jedoch die Feder noch gespannt und der Verriegelungskolben noch nicht gegen den Anschlag verfahren ist;
- Fig. 7a: eine Schnittansicht eines Teils des Rotors im von der Antriebswelle abgenommenen Zustand wie Fig. 6a, jedoch mit entspannter Feder, und
- Fig. 7b: eine Schnittansicht eines Teils der Antriebswelle, bei dem der Rotor entfernt ist, wie in Fig. 6b, jedoch die Feder entspannt und der Verriegelungskolben gegen den Anschlag verfahren ist.

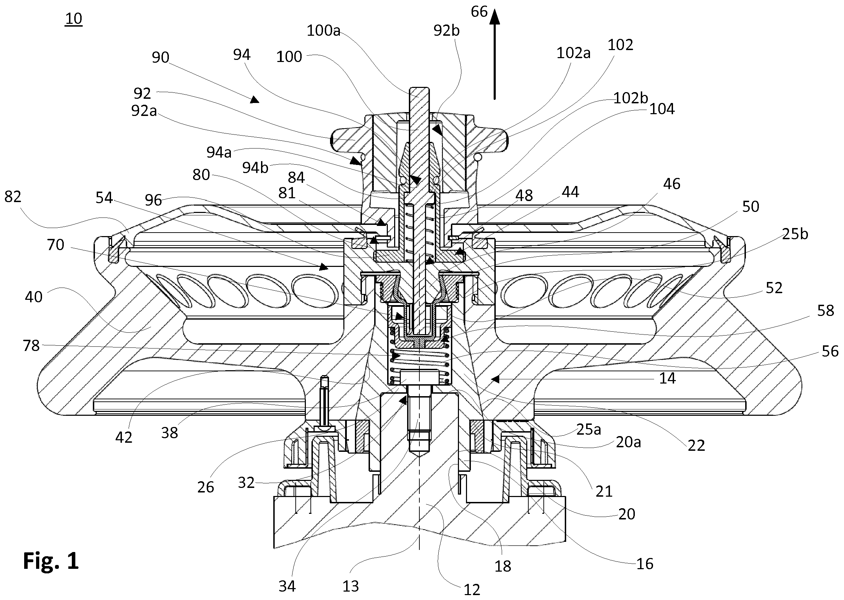

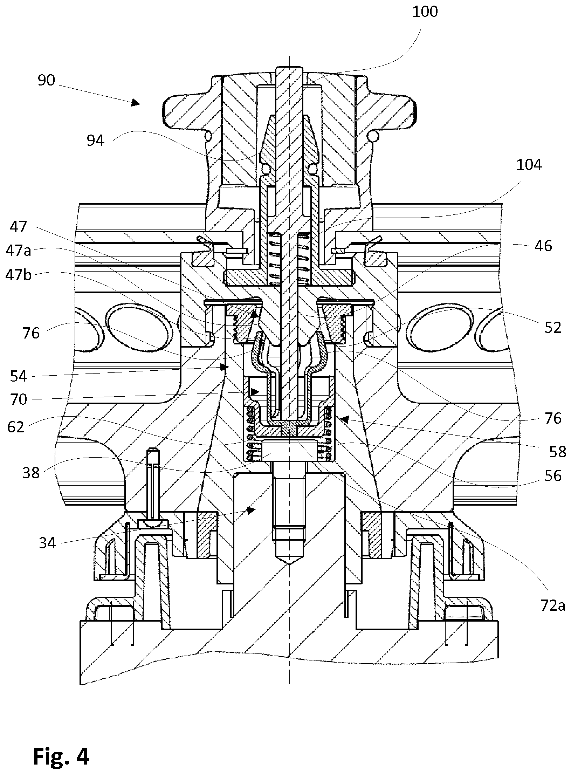

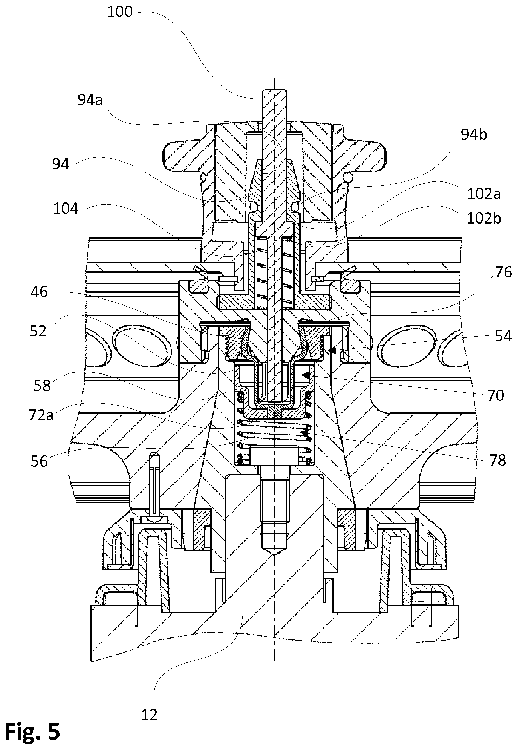

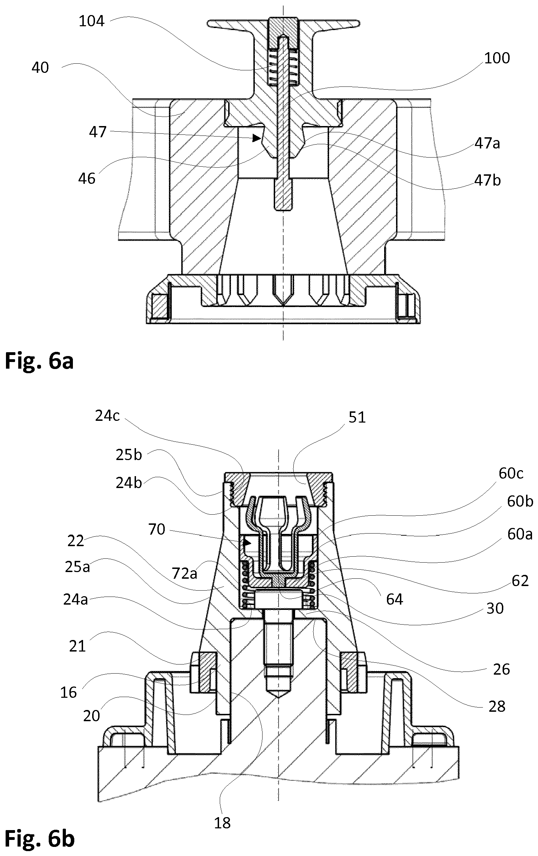

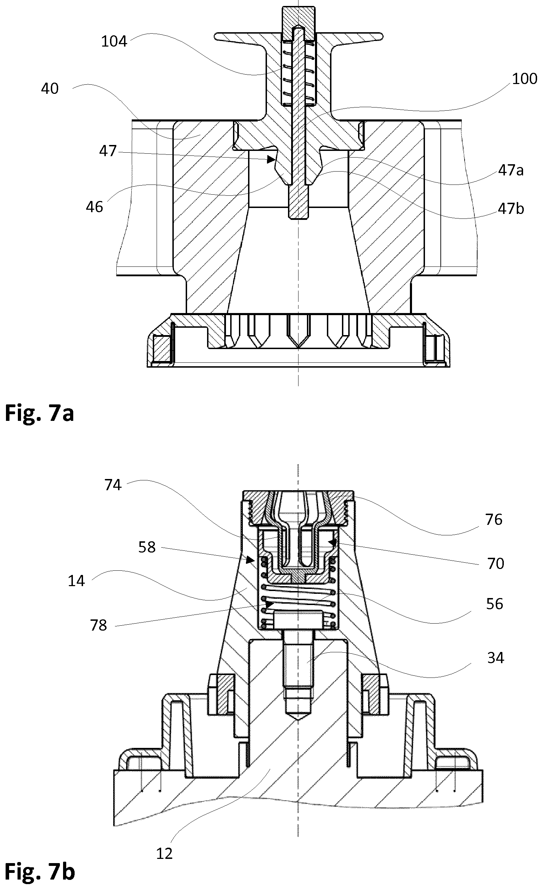

Fig. 1 zeigt in schematischer Darstellung einen vertikalen Schnitt einer insgesamt mit der Bezugsziffer 10 bezeichneten erfindungsgemäßen Zentrifuge mit einem Winkelrotor gemäß einer ersten Ausführungsform der Erfindung. Der Übersichtlichkeit halber ist die Unterkonstruktion nicht dargestellt, es wird nur der obere Bereich einer Antriebswelle 12 schematisch angedeutet. Auf der Antriebswelle 12 ist ein Rotor 40 angeordnet. Zur deutlicheren Darstellung ist in Fig. 4 eine vergrößerte Darstellung eines Ausschnitts von Fig. 1 im entriegelten Zustand wiedergegeben, und in Fig. 5 eine vergrößerte Darstellung eines Ausschnitts von Fig. 1 im verriegelten Zustand. In den Fig. 6a, 6b und 7a, 7b ist eine zweite Ausführungsform der Erfindung dargestellt, in der die Zentrifuge einen Ausschwingrotor ohne Deckel aufweist. Antriebsseitig ist die Verriegelung/Entriegelung jedoch identisch mit der ersten Ausführungsform gelöst.

Nach dem in den Figuren dargestellten Ausführungsbeispiel umfasst die Zentrifuge 10 eine zylindrische Antriebswelle 12 und einen auf der Antriebswelle 12 angeordneten und mit der Antriebswelle 12 drehfest verbundenen Adapter 14. Auf dem Adapter 14 ist eine konzentrisch angeordnete Rotornabe 42 eines Rotors 40 aufgebracht. Der Adapter 14 und die Rotornabe 42 und somit die Antriebswelle 12 und der Rotor 40 sind drehfest in nachstehend erläuterter Weise verbunden. Der Rotor 40 umfasst einen Schnellverschluss 54. Über diesen Schnellverschluss 54 wird der Rotor 40 mit dem Adapter 14 und somit mit der Antriebswelle 12 verbunden.

Der Adapter 14 kann konstruktiv auch in Einheit mit der Antriebswelle 12 ausgelegt werden und dementsprechend die Rotornabe 42 adaptieren. Im Übrigen ist der Adapter 14 optional. Alternativ kann auch die Antriebswelle 12 zur unmittelbaren Aufnahme der Rotornabe 42 ausgebildet sein.

Gemäß Fig. 6b und 7b weist der Adapter 14 bezogen auf eine Entnahmerichtung 66 eine untere Umfangswandung 16 auf, die den Endbereich der Antriebswelle 12 an seiner zylindrischen Außenseite 20 und seiner oben angeordneten Stirnseite 20a umschließt. Die untere Umfangswandung 16 ist mit einer inneren Kontur 18 versehen, die an das freie Ende der Antriebswelle 12 angepasst ist und an diesem anliegt. Zudem ist eine obere Umfangswandung 22 mit einer inneren Kontur 24a, 24b, 24c und einer äußeren Kontur 25a, 25b vorgesehen. Die innere Kontur 24a, 24b, 24c der oberen Umfangswandung 22 ist zweigeteilt ausgebildet und mit einem längeren Teilabschnitt 24a versehen, an dessen rotorseitigen Ende sich ein Absatz 24b anschließt. An diesen Absatz 24b schließt sich wiederum ein kürzerer Teilabschnitt 24c mit einem gegenüber dem längeren Teilabschnitt 24a verbreiteten Innendurchmesser an. Zwischen der inneren Kontur 18 der unteren Umfangswandung 16 und der inneren Kontur 24a, 24b, 24c der oberen Umfangswandung 22 befindet sich eine Trennwand 26, die eine Unterseite 28, eine Oberseite 30 und eine konzentrische Gewindebohrung 32 aufweist. Die Unterseite 28 liegt auf der Stirnseite 20a der Antriebswelle 12 auf. In die konzentrische Gewindebohrung 32 der Trennwand 26 greift eine Gewindeschraube 34 ein. Des Weiteren ist die Antriebswelle 12 an ihrer Stirnseite 20a mit Stiften versehen, die in Bohrungen der Trennwand 26 eingreifen. Diese sind aus Gründen der Übersicht nicht dargestellt. Hierdurch sind die Antriebswelle 12 und der Adapter 14 drehfest miteinander verbunden.

Alternativ weist die Antriebswelle 12 zur Zentrierung des Adapters 14 auf der Antriebswelle 12 einen Konus auf, der sich entgegen der Entnahmerichtung 66 verbreitert. Der Adapter 14 ist dabei entsprechend an die Außenform der Antriebswelle 12 angepasst. Adapter und Antriebswelle sind zur Drehmomentübertragung miteinander verschraubt.

Die äußere Kontur 25a, 25b des Adapters 14 ist im Wesentlichen dem Innenprofil der Rotornabe 42 angepasst und verläuft von einem Absatz 21 aus betrachtet zuerst in Form eines sich nach oben hin verjüngenden Konus 25a, dann in Form eines Zylinders 25b.

Das Innenprofil der Rotornabe 42 erstreckt sich über das nach oben freie Ende der oberen Umfangswandung 22 des Adapters 14 hinaus und geht dann in einen Rotorzentralbereich 44 über, welcher drehfest mit der Rotornabe 42 verbunden ist.

Zur axialen Fixierung weist der Rotorzentralbereich 44 ein in den Adapter 14 hineinragendes Verriegelungsteil 46 mit einer Außenkontur 47 auf, deren Durchmesser entgegen der Entnahmerichtung 66 sich zuerst bis zu einer breitesten Stelle 47a vergrößert und dann abnimmt. Der Bereich der Außenkontur 47, in dem der Umfang entgegen der Entnahmerichtung 66 abnimmt, bildet eine Steuerfläche 47b, deren Funktion später erläutert wird. Das Verriegelungsteil 46 ist von der inneren Kontur 24a, 24b, 24c des Adapters 14 beabstandet und erstreckt sich in axialer Richtung etwa bis zum Absatz 24b der inneren Kontur 24a, 24b, 24c des Adapters 14. Im Verriegelungsteil 46 ist eine konzentrisch zur Antriebsachse 13 verlaufende Bohrung 48 eingebracht.

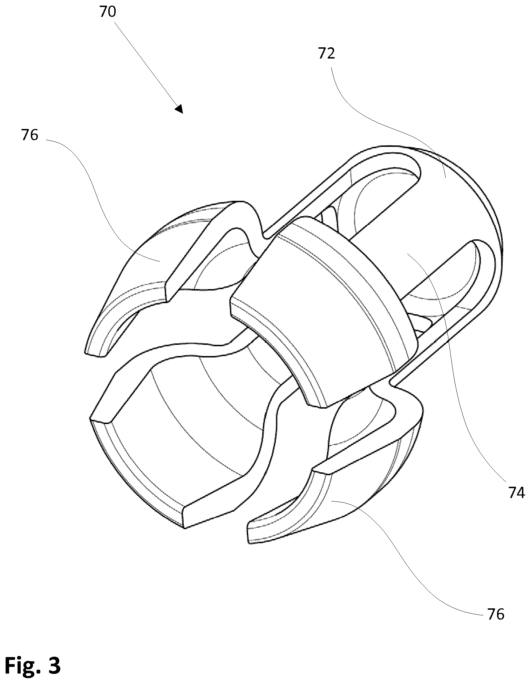

Innerhalb des Adapters 14 oberhalb der Trennwand 26 befindet sich der wellenseitige Teil des Schnellverschlusses 54. Dieser Teil umfasst eine in Fig. 3 perspektivisch dargestellte Sperreinheit 70 aus vier über einen Verbindungsring 72 verbundenen Sperrfedern 74, an deren Ende jeweils ein Sperrelement 76 angebracht ist. Die Sperreinheit 70 ist auf einem Verriegelungskolben 58 gelagert, der von einer an der Trennwand 26 anliegenden Feder 56 in die Entnahmerichtung 66 beaufschlagt ist. Die äußere Kontur 60a, 60b, 60c des Verriegelungskolbens 58 weist am zur Antriebswelle 12 gewandten Ende einen von der inneren Kontur 24a, 24b, 24c des Adapters 14 beabstandeten zylindrischen Bereich 60a auf. Hieran schließt sich ein Absatz 60b an, woran sich wiederum ein zylindrischer Bereich 60c anschließt, der an der inneren Kontur 24a, 24b, 24c des Adapters 14 anliegt und entlang dieser verfahrbar ist. Den zylindrischen Bereich 60a umgreift ein Endbereich der Feder 56, welche an dem Absatz 60b anliegt. In einem Bodenbereich 62 des Verriegelungskolbens 58 ist eine Ausnehmung 64 vorgesehen, in die ein am Verbindungsring 72 auf der den Sperrfedern 74 gegenüberliegenden Seite befestigter Fixierstift 72a eingreift.

In den Teilabschnitt 24c des Adapters 14 ist ein Widerlagereinsatz 50 eingeschraubt, der sich über das nach oben freie Ende des Teilabschnitts 24c erstreckt und dessen äußere Kontur oberhalb des Teilabschnitts 24c der inneren Kontur des Rotorzentralbereichs 44 angepasst ist. Der Widerlagereinsatz 50 weist eine Bohrung 51 auf, die am oberen Ende so bemessen ist, dass das Verriegelungsteil 46 mit seiner breitesten Stelle 47a passieren kann. Die Bohrung 51 verbreitert sich nach unten konisch und bildet eine Widerlagerfläche 52 aus, deren Funktion später erläutert wird.

Die innere Kontur 24a, 24b, 24c des Adapters 14 bildet zusammen mit der Widerlagerfläche 52 des Widerlagereinsatzes 50 und, bei aufgesetztem Rotor 40, der Außenkontur 47 des Verriegelungsteils 46 die Begrenzung eines Verriegelungsraums 78, in dem die Verriegelung bzw. Entriegelung des Rotors 40 und somit die axiale Fixierung des Rotors 40 erfolgt.

Oberhalb des Rotors 40 ist ein abnehmbarer Deckel 82 angeordnet, der mit einer Handhabe 90 eine unlösbare Baueinheit bildet. Die Handhabe 90 ist konzentrisch mit der Antriebsachse 13 an der Oberseite des Deckels 82 befestigt, wobei das Gehäuse 92 der Handhabe 90 eine rotationssymmetrische Außenkontur 92a und eine zylindrische Innenkontur 92b aufweist und bereichsweise eine Ausnehmung 84 des Deckels 82 durchgreift.

An der Oberseite des Rotorzentralbereichs 44 ist konzentrisch mit der Antriebsachse 13 eine Wandung 80 ausgebildet. Ein Zentrierdorn 94, an dessen antriebsseitigem Ende ein flanschartiger Fixierring 96 vorgesehen ist, ist ebenso konzentrisch innerhalb der Wandung 80 angeordnet und über den Fixierring 96 mit der Wandung 80 verschraubt und dadurch mit dem Rotor 40 verbunden. Der Zentrierdorn 94 weist ein freies Ende 95a auf, dessen Außenkontur sich in Entnahmerichtung konisch verjüngt, und einen zwischen dem freien Ende 95a und dem Fixierring 96 liegenden Zylinder 95b. Das freie Ende 95a und der Zylinder 95b greifen im aufgesetzten Zustand des Deckels 82 in das Gehäuse 92 der Handhabe 90 ein. Die Außenkontur des Zylinders 95b ist an die Innenkontur 92b des Gehäuses 92 angepasst, um den Deckel 82 in aufgesetztem Zustand festzulegen, während die Außenkontur des freien Endes 95a konisch ausgebildet ist, um den Deckel 82 beim Aufsetzen einfacher zentrieren zu können. Über einen Schnappverschluss kann der Deckel 82 mit der Handhabe 90 vom Zentrierdorn 94 gelöst werden.

Der rotorseitige Teil des Schnellverschlusses 54 ist im Wesentlichen im Inneren der Handhabe 90 und insbesondere des Zentrierdorns 94 angeordnet. Er umfasst einen Betätigungsstift 100, dessen Länge größer ist als die axiale Erstreckung der Handhabe 90 und der wellenseitig das Verriegelungsteil 46 durchgreift und mit dem Bodenbereich 62 des Verriegelungskolbens 58 in Anlage kommt. Ferner umfasst der rotorseitige Teil des Schnellverschlusses 54 eine Feder 104, die den Betätigungsstift 100 in Entnahmerichtung 66 beaufschlagt. Eine Innenkontur 94a des Zentrierdorns 94 dient bereichsweise als Führungsröhre für den Betätigungsstift 100. Um die vertikale Verschiebung des Betätigungsstifts 100 in Entnahmerichtung 66 zu begrenzen, ist ein umlaufendes Querstück 102 vorgesehen, das den Durchmesser des Betätigungsstifts 100 verbreitert. Auf der zur Handhabe 90 weisenden Seite bildet das Querstück 102 mit dem Betätigungsstift 100 einen Absatz 102a, der beim Verschieben des Betätigungsstifts 100 in Entnahmerichtung 66 in Anlage mit einem zugeordneten Absatz 94b der Innenkontur 94a des Zentrierdorns 94 kommt, wodurch ein weiteres Verschieben verhindert wird. Auf der in axialer Richtung gegenüberliegenden Seite bildet das Querstück 102 mit dem Betätigungsstift 100 einen Absatz 102b, der eine Anlagefläche für die Feder 104 bildet. Auf ihrem vom Absatz 102b abgewandten Ende liegt die Feder 104 am Rotor 40 im von der Wandung 80 begrenzten Aufnahmebereich 81 für die Handhabe 90 an. Alternativ dazu kann auch die Feder 104 entfallen und der Betätigungsstift 100 nur mit dem mit der Feder 56 beaufschlagten Verriegelungskolben 58 zusammenwirken. Für beide Varianten bildet das freie Ende des Betätigungsstifts 100 einen Betätigungsknopf 100a. Im Zusammenwirken von Handhabe 90 und Betätigungsknopf 100a erfolgt die Entriegelung. Der Betätigungsknopf 100a muss gedrückt werden, wobei die Handhabe dem Nutzer als Gegenlager dient, dann kann der Rotor 40 insbesondere über die Handhabe 90 entnommen werden.

In Fig. 4 ist in einem Ausschnitt aus einem Querschnitt entlang der Mittelachse der Zentrifuge von Fig. 1 der Schnellverschluss 54 im entriegelten Zustand dargestellt, wobei der Rotor 40 aber noch auf dem Adapter 14 aufgesetzt ist. Der Betätigungsstift 100 ist gegen die Beaufschlagung der Feder 104 entgegen der Entnahmerichtung 66 gedrückt. Dadurch ist auch der Verriegelungskolben 58, mit dessen Bodenbereich 62 der Betätigungsstift 100 wellenseitig in Anschlag steht, im Verriegelungsraum 78 gegen die Beaufschlagung der Feder 56 entgegen der Entnahmerichtung 66 verschoben und steht mit dem Kopf 38 der Gewindeschraube 34 in Anschlag. Die durch den Fixierstift 72a im Bodenbereich 62 des Verriegelungskolbens 58 verankerte Sperreinheit 70 ist ebenso in Richtung der Antriebswelle 12 verschoben, so dass die Sperrelemente 76 mit ihren freien Enden an der Steuerfläche 47b des Verriegelungsteils 46 anliegen und sich somit außerhalb ihrer Sperrposition zwischen Verriegelungsteil 46 und Widerlagerfläche 52 befinden.

Die Fig. 6a und 6b zeigen der besseren Übersichtlichkeit halber den rotorseitigen Ausschnitt (Fig. 6a) und den wellenseitigen Ausschnitt (Fig. 6b) getrennt voneinander.

Zur Verriegelung wird der Druck auf den Betätigungsstift 100 entgegen der Entnahmerichtung 66 aufgehoben. Beim Aufsetzen muss der Betätigungsstift 100 hierzu nicht manuell betätigt werden, die Gewichtskraft des Rotors 40 und ggfs. eine leichtes Andrücken durch den Nutzer reicht aus. Der Verriegelungskolben 58 und damit auch die auf dem Verriegelungskolben 58 gelagerte Sperreinheit 70 werden auf Grund der Beaufschlagung durch die Feder 56 in Entnahmerichtung 66 verfahren. Dabei gleiten die Sperrelemente 76 an der Steuerfläche 47b des Verriegelungsteils 46 entlang vorbei an der breitesten Stelle 47a in ihre Sperrposition zwischen der Außenkontur 47 des Verriegelungsteils 46 und der Widerlagerfläche 52. Die Gewichtskraft des Rotors 40 wirkt den über die Steuerfläche 47b gleitenden Sperrelemente 76 der Sperreinheit 70 entgegen. Aufgrund der federelastischen Ausbildung der Sperrfedern 74 werden die Sperrelemente 76 lateral ausgelenkt, um die breiteste Stelle 47a zu passieren, kehren dann aber annähernd in ihre ursprüngliche Ausrichtung zurück und liegen wieder an der Außenkontur 47 des Verriegelungsteils 46 an. Der Rotor 40 ist nun in axialer Richtung in der Zentrifuge fixiert.

In Fig. 5 ist in einem Ausschnitt aus einem Querschnitt entlang der Mittelachse der Zentrifuge von Fig. 1 der Schnellverschluss 54 im verriegelten Zustand dargestellt. Im Gegensatz zur Darstellung in den Fig. 4 befindet sich der Betätigungsstift 100 hier in der Position, in die er von der Beaufschlagung durch die Feder 104 selbsttätig gebracht wird, wenn kein Druck von außen in Richtung der Antriebswelle 12 auf ihn ausgeübt wird, und steht mit dem Absatz 102a in Anlage am zugeordneten Absatz 94b des Zentrierdorns 94. Der Verriegelungskolben 58 und die auf dem Verriegelungskolben 58 gelagerte Sperreinheit 70 befinden sich, bedingt durch die Beaufschlagung der Feder 56 und durch das Fehlen von durch den Betätigungsstift 100 in Richtung Antriebswelle 12 ausgeübten Drucks, im rotornahen Bereich des Verriegelungsraums 78. Die Sperrelemente 76 befinden sich in ihrer Sperrposition zwischen der Außenkontur 47 des Verriegelungsteils 46 und Widerlagerfläche 52. Der Schnellverschluss 54 ist verriegelt.

Die Fig. 7a und 7b zeigen der besseren Übersichtlichkeit halber den rotorseitigen Ausschnitt, siehe Fig. 7a, und den wellenseitigen Ausschnitt, siehe Fig. 7b, getrennt voneinander.

### Bezugszeichenliste

- 10: Zentrifuge
- 12: Antriebswelle
- 13: Antriebsachse
- 14: Adapter
- 16: untere Umfangswandung
- 18: innere Kontur
- 20: Außenseite
- 20a: Stirnseite
- 21: Absatz
- 22: obere Umfangswandung
- 24a: langer Teilabschnitt
- 24b: Absatz
- 24c: kurzer Teilabschnitt
- 25a: Konus
- 25b: Zylinder
- 26: Trennwand
- 28: Unterseite
- 30: Oberseite
- 32: Gewindebohrung
- 34: Gewindeschraube
- 38: Kopf
- 40: Rotor
- 42: Rotornabe
- 44: Rotorzentralbereich
- 46: Verriegelungsteil
- 47: Außenkontur
- 47a: breiteste Stelle
- 47b: Steuerfläche
- 48: Bohrung
- 50: Widerlagereinsatz
- 51: Öffnung
- 52: Widerlagerfläche
- 54: Schnellverschluss
- 56: Feder
- 58: Verriegelungskolben
- 60a: zylindrischer Bereich
- 60b: Absatz
- 60c: zylindrischer Bereich
- 62: Bodenbereich
- 64: Ausnehmung
- 66: Entnahmerichtung
- 70: Sperreinheit
- 72: Verbindungsring
- 72a: Fixierstift
- 74: Sperrfedern
- 76: Sperrelemente
- 78: Verriegelungsraum
- 80: Wandung
- 81: Aufnahmebereich für Handhabe
- 82: Deckel
- 84: Ausnehmung
- 90: Handhabe
- 92: Gehäuse
- 92a: Außenkontur
- 92b: Innenkontur
- 94: Zentrierdorn
- 94a: Innenkontur
- 94b: Absatz
- 95a: freies Ende
- 95b: Zylinder
- 96: Fixierring
- 100: Betätigungsstift
- 100a: Betätigungsknopf
- 102: Querstück
- 102a: Absatz
- 102b: Absatz
- 104: Feder

## Patentansprüche

1. Zentrifuge (10), aufweisend eine Antriebswelle (12), einen auf der Antriebswelle (12) gelagerten, axial in eine Entnahmerichtung (66) abnehmbaren Rotor (40), einen in den Rotor (40) und die Antriebswelle (12) integrierten Schnellverschluss (54), mittels dessen der Rotor (40) gegenüber der Antriebswelle (12) in Entnahmerichtung (66) fixierbar ist, ein Widerlager (50, 52) in der Antriebswelle (12), in das der Rotor (40) mit einem Verriegelungsteil (46) eingreift, zumindest ein Sperrelement (76), welches bei seiner Aktivierung den Rotor (40) relativ zur Antriebswelle (12) festlegt und welches zwischen dem Verriegelungsteil (46) des Rotors (40) und dem Widerlager (50, 52) der Antriebswelle (12) wirkt, wobei der Schnellverschluss (54) ein Kraftübertragungselement (58, 72) aufweist, **dadurch gekennzeichnet, dass** das Sperrelement (76) über das Kraftübertragungselement (58, 72) mit einem Betätigungselement (100, 100a) in Wirkverbindung stehen, dass die Entriegelung des Schnellverschlusses (54) durch eine Bewegung des Betätigungselements (100, 100a), des Kraftübertragungselements (58, 72) und des Sperrelements (76) relativ zum Verriegelungsteil (46) in eine Richtung parallel zur Antriebswelle (12) erfolgt und dass während der Entriegelung eine Bewegung des Betätigungselements (100, 100a) in Richtung auf die Antriebswelle (12) und während einer Verriegelung eine Relativbewegung des Kraftübertragungselements (58, 72) und des Sperrelements (76) auf der einen Seite und des Verriegelungsteils (46) auf der anderen Seite aufeinander zu erfolgen.

2. Zentrifuge nach Anspruch 1, **dadurch gekennzeichnet, dass** das Sperrelement (76) in der Verriegelungsstellung durch Federkraft in die Verriegelungsstellung vorgespannt sind und hierfür zumindest eine Feder (74) vorgesehen ist.

3. Zentrifuge nach Anspruch 1 oder 2, **dadurch gekennzeichnet, dass** mehrere Sperrelemente (76) vorgesehen sind, die in gleichmäßigen Abständen zueinander angeordnet sind und die in der Verriegelungsstellung um das Verriegelungsteil (46) angeordnet sind.

4. Zentrifuge nach einem der vorangehenden Ansprüche, **dadurch gekennzeichnet, dass** die Sperrelemente (76) mit Federn (74), insbesondere elastisch verschwenkbaren Fingern und diese mit einem gemeinsamen Träger (72) verbunden sind, wobei die Sperrelemente (76) in Richtung Verriegelungsteil (46) des Rotors (40) vorbelastet sind.

5. Zentrifuge nach Anspruch 4, **dadurch gekennzeichnet, dass** die Sperrelemente (76), die Federn (74) und der Träger (72) als Baueinheit eine Sperreinheit (70) bilden.

6. Zentrifuge nach einem der vorangehenden Ansprüche, **dadurch gekennzeichnet, dass** die Form des Sperrelements (76) an den zugeordneten Bereich des Verriegelungsteils (46) des Rotors (40) angepasst ist.

7. Zentrifuge nach einem der vorangehenden Ansprüche, **dadurch gekennzeichnet, dass** das Verriegelungsteil (46) rotationssymmetrisch ausgebildet ist, sich insbesondere zunächst in Richtung Antriebswelle (12) konisch verbreitert und vorzugsweise sich dann wieder bereichsweise verschmälert.

8. Zentrifuge nach einem der vorangehenden Ansprüche, **dadurch gekennzeichnet, dass** Verriegelungsteil (46) einstückig und materialeinheitlich mit dem Rotor (40) ausgebildet ist.

9. Zentrifuge nach einem der Ansprüche 5 bis 8, **dadurch gekennzeichnet, dass** die Sperreinheit (70) auf einem Verriegelungskolben (58) angeordnet ist, der durch eine Feder (56) in die Verriegelungsstellung belastet ist.

10. Zentrifuge nach Anspruch 9, **dadurch gekennzeichnet, dass** die Antriebswelle (12) einen Anschlag (38) aufweist, gegen den der Verriegelungskolben (58) in der maximalen Öffnungsstellung anliegt.

11. Zentrifuge nach einem der vorangehenden Ansprüche, **dadurch gekennzeichnet, dass** das Betätigungselement (100, 100a) als Betätigungsstift (100) ausgebildet ist, der in der Handhabe (90) verschiebbar gelagert ist, der die Handhabe (90) durchgreift und der mit einem aus der Handhabe (90) herausragenden freien Ende einen Betätigungsknopf (100a) ausbildet.

12. Zentrifuge nach einem der vorangehenden Ansprüche, **dadurch gekennzeichnet, dass** das Widerlager (50, 52) Teil der Begrenzung eines Verriegelungsraums (78) ist, der eine Bohrung (51) für das Einbringen des Verriegelungsteils (46) aufweist, in den das Verriegelungsteil (46) des Rotors (40) eingreift und in dem die Sperreinheit (70), der Verriegelungskolben (58) und die Feder (56) angeordnet sind.

13. Zentrifuge nach Anspruch 12, **dadurch gekennzeichnet, dass** das Verriegelungsteil (46), der Verriegelungsraum (78), die Sperreinheit (70), das Kraftübertragungselement (58, 72), die Handhabe (90) und/oder die Antriebswelle (12) konzentrisch zueinander angeordnet sind.

14. Zentrifuge nach einem der vorangehenden Ansprüche, **dadurch gekennzeichnet, dass** die Sperrelemente (76) zum Entriegeln und Verriegeln des Schnellverschlusses (54) durch die Sperrfeder (74) elastisch so auslenkbar sind, dass das Verriegelungsteil (46) an seiner breitesten Stelle in Bezug auf die Antriebsachse (13) der Antriebswelle (12) durch die Sperrelemente (76) passierbar ist.

15. Zentrifuge nach einem der vorangehenden Ansprüche, **dadurch gekennzeichnet, dass** das Verriegelungsteil (46) eine Steuerfläche (47b) für die Sperrelemente (76) aufweist, die bei Einbringen des Rotors (40) durch Bewegen entgegen der Entnahmerichtung (66) in eine Verriegelungsposition des Schnellverschlusses (54) die Sperrelemente (76) zwischen Verriegelungsteil (46) und Widerlager (52) drückt.

## Claims

1. Centrifuge (10), comprising a driveshaft (12), a rotor (40) mounted on said driveshaft (12) and which can be removed axially in a removal direction (66), a quick-action closure (4) integrated in said rotor (40) and said driveshaft (12) and which can be used to fix said rotor (40) relative to said driveshaft (12) in the removal direction (66), an abutment (50, 52) in said driveshaft (12) in which the rotor (40) engages with a locking member (46) thereof, at least one locking element (76), which - upon its activation - fixes said rotor (40) relative to said driveshaft (12) and which acts between the locking member (46) of said rotor (40) and the abutment (50, 52) of said driveshaft (12), said quick-action closure (54) having a force-transmission element (58, 72), **characterized in that** the locking element (76) is operatively connected to an actuating element (100, 100a) via the force-transmission element (58, 72), **in that** unlocking of said quick-action closure (54) is effected by moving said actuating element (100, 100a), said force-transmission element (58, 72) and said locking element (76) relative to said locking member (46) in a direction parallel to said driveshaft (12), and **in that**, during unlocking, said actuating element (100, 100a) is moved in the direction of said driveshaft (12) and that, during locking, there is a relative movement of said force-transmission element (58, 72) and said locking element (76) on the one side, and of said locking member (46) on the other side toward each other.

2. Centrifuge according to claim 1, **characterized in that** said locking element (76), in a locking position thereof, is preloaded to the locking position by spring force and that at least one spring (74) is provided for this purpose.

3. Centrifuge according to claim 1 or 2, **characterized in that** a plurality of locking elements (76) are provided which are arranged at regular intervals from each other and which, in a locking position thereof, are positioned around said locking member (46).

4. Centrifuge according to any one of the preceding claims, **characterized in that** said locking elements (76) are connected to springs (74), in particular to elastically pivotable fingers which are in turn connected to a common carrier (72), with said locking elements (76) being preloaded in the direction of the locking member (46) of said rotor (40).

5. Centrifuge according to claim 4, **characterized in that** said locking elements (76), said springs (74) and said carrier (72) are a structural unit which constitutes a locking unit (70).

6. Centrifuge according to any one of the preceding claims, **characterized in that** said locking element (76) is adapted in shape to the associated area of the locking member (46) of said rotor (40).

7. Centrifuge according to any one of the preceding claims, **characterized in that** said locking member (46) is designed to be rotationally symmetrical, in particular initially widens conically in the direction of the driveshaft (2) and then preferably narrows again in some areas.

8. Centrifuge according to any one of the preceding claims, **characterized in that** said locking member (46) is integrally formed with said rotor (40) and also made of the same material.

9. Centrifuge according to any one of claims 5 to 8, **characterized in that** said locking unit (70) is arranged on a locking piston (58) which is loaded into the locking position by a spring (56).

10. Centrifuge according to claim 9, **characterized in that** said driveshaft (12) has a stop (38) against which said locking piston (58) rests in its maximum open position.

11. Centrifuge according to any one of the preceding claims, **characterized in that** said actuating element (100, 100a) is designed as an actuating pin (100) which is slidably mounted in the handle (90), which engages through said handle (90) and which has a free end that protrudes from said handle (90) and forms an actuating button (100a).

12. Centrifuge according to any one of the preceding claims, **characterized in that** said abutment (50, 52) is part of the boundary of a locking chamber (78) which has a bore (51) made in it for inserting the locking member (46) and in which the locking member (46) of said rotor (40) engages and in which the locking unit (70), the locking piston (58) and the spring (56) are arranged.

13. Centrifuge according to claim 12, **characterized in that** said locking member (46), said locking chamber (78), said locking unit (70), said force-transmission element (58, 72), said handle (90) and/or said driveshaft (12) are arranged concentrically relative to one another.

14. Centrifuge according to any one of the preceding claims, **characterized in that** said locking elements (76) for unlocking and locking the quick-action closure (54) can be elastically deflected by the locking spring (74) in such a way that the locking member (46), at its widest point with respect to the drive axis (13) of the driveshaft (12), can be passed by the locking elements (76).

15. Centrifuge according to any one of the preceding claims, **characterized in that** said locking member (46) has a control surface (47b) for the locking elements (76) that will urge the locking elements (76) between the locking member (46) and the abutment (52) as the rotor (40) is introduced by moving it against the withdrawal direction (66) into a locking position of the quick-action closure (54).

## Revendications

1. Centrifugeuse (10), comprenant un arbre d'entraînement (12), un rotor (40) monté sur l'arbre d'entraînement (12) et démontable axialement dans une direction de retrait (66), une fermeture rapide (54) intégrée au rotor (40) et à l'arbre d'entraînement (12), au moyen de laquelle le rotor (40) peut être fixé dans la direction de retrait (66) par rapport à l'arbre d'entraînement (12), une butée (50, 52) disposée dans l'arbre d'entraînement (12) et dans laquelle le rotor (40) s'engage avec un élément de verrouillage (46), au moins un élément de blocage (76), lequel immobilise le rotor (40) par rapport à l'arbre d'entraînement (12) lorsqu'il est activé, et agit entre l'élément de verrouillage (46) du rotor (40) et la butée (50, 52) de l'arbre d'entraînement (12), dans laquelle la fermeture rapide (54) présente un élément de transmission de force (58, 72), **caractérisée en ce que** l'élément de blocage (76) est en liaison fonctionnelle avec un élément d'actionnement (100, 100a) au moyen de l'élément de transmission de force (58, 72), **en ce que** le déverrouillage de la fermeture rapide (54) est effectué par déplacement de l'élément d'actionnement (100, 100a), de l'élément de transmission de force (58, 72) et de l'élément de blocage (76) par rapport à l'élément de verrouillage (46), dans une direction parallèle à l'arbre d'entraînement (12), et **en ce que** pendant le déverrouillage, un déplacement de l'élément d'actionnement (100, 100a) dans la direction de l'arbre d'entraînement (12), et pendant un verrouillage, un déplacement relatif de l'élément de transmission de force (58, 72) et de l'élément de blocage (76) sur un côté et de l'élément de verrouillage (46) sur l'autre côté sont effectués successivement.

2. Centrifugeuse selon la revendication 1, **caractérisée en ce que** l'élément de blocage (76) est précontraint par force de ressort dans la position de verrouillage, et **en ce qu'**au moins un ressort (74) est prévu à cet effet.

3. Centrifugeuse selon la revendication 1 ou 2, **caractérisée en ce que** plusieurs éléments de blocage (76) sont prévus, disposés à intervalles réguliers les uns des autres et autour de l'élément de verrouillage (46) en position de verrouillage.

4. Centrifugeuse selon l'une des revendications précédentes, **caractérisée en ce que** les éléments de blocage (76) sont raccordés à des ressorts (74), en particulier à des doigts élastiquement pivotants, et **en ce que** ceux-ci sont raccordés à un support (72) commun, dans laquelle les éléments de blocage (76) sont précontraints dans la direction de l'élément de verrouillage (46) du rotor (40).

5. Centrifugeuse selon la revendication 4, **caractérisée en ce que** les éléments de blocage (76), les ressorts (74) et le support (72) forment une unité de blocage (70) en tant qu'unité de construction.

6. Centrifugeuse selon l'une des revendications précédentes, **caractérisée en ce que** la forme de l'élément de blocage (76) est ajustée à la partie correspondante de l'élément de verrouillage (46) du rotor (40).

7. Centrifugeuse selon l'une des revendications précédentes, **caractérisée en ce que** l'élément de verrouillage (46) est réalisé avec symétrie de révolution, s'élargit en particulier coniquement dans la direction arbre d'entraînement (12) avant de s'amincir partiellement de préférence.

8. Centrifugeuse selon l'une des revendications précédentes, **caractérisée en ce que** l'élément de verrouillage (46) est réalisé d'un seul tenant avec le rotor (40) et avec le même matériau que celui-ci.

9. Centrifugeuse selon l'une des revendications 5 à 8, **caractérisée en ce que** l'unité de blocage (70) est disposée sur un piston de verrouillage (58) contraint par un ressort (56) en position de verrouillage.

10. Centrifugeuse selon la revendication 9, **caractérisée en ce que** l'arbre d'entraînement (12) présente une butée (38) contre laquelle repose le piston de verrouillage (58) en position d'ouverture maximale.

11. Centrifugeuse selon l'une des revendications précédentes, **caractérisée en ce que** l'élément d'actionnement (100, 100a) est réalisé comme broche d'actionnement (100) montée de manière mobile dans la poignée (90), traversant la poignée (90) et formant une tête d'actionnement (100a) avec une extrémité libre sortant de la poignée (90).

12. Centrifugeuse selon l'une des revendications précédentes, **caractérisée en ce que** la butée (50, 52) fait partie de la délimitation d'un compartiment de verrouillage (78) comprenant un alésage (51) pour la mise en place de l'élément de verrouillage (46), où s'engage l'élément de verrouillage (46) du rotor (40) et où sont disposés l'unité de blocage (70), du piston de verrouillage (58) et le ressort (56).

13. Centrifugeuse selon la revendication 12, **caractérisée en ce que** l'élément de verrouillage (46), le compartiment de verrouillage (78), l'unité de blocage (70), l'élément de transmission de force (58, 72), la poignée (90) et/ou l'arbre d'entraînement (12) sont disposés concentriquement.

14. Centrifugeuse selon l'une des revendications précédentes, **caractérisée en ce que** les éléments de blocage (76) sont élastiquement déformables pour le déverrouillage et le verrouillage de la fermeture rapide (54) par le ressort de blocage (74), de telle manière que l'élément de verrouillage (46) peut être passé par les éléments de blocage (76), sur sa zone la plus large par rapport à l'axe d'entraînement (13) de l'arbre d'entraînement (12).

15. Centrifugeuse selon l'une des revendications précédentes, **caractérisée en ce que** l'élément de verrouillage (46) présente une surface de commande (47b) pour les éléments de blocage (76), laquelle serre les éléments de blocage (76) entre élément de verrouillage (46) et butée (52) lors de la mise en place du rotor (40), par déplacement dans la direction opposée à la direction de retrait (66) vers une position de verrouillage de la fermeture rapide (54).
